# EUROPEAN PATENT APPLICATION

(11) **EP 1 300 793 A1**
(43) Date of publication of application: **09.04.2003**
(21) Application number: 02256559.2
(22) Date of filing: 20.09.2002
(51) Int. Cl.: G06F 17/60

(54) **Method and apparatus for the selection of a service provider**

(30) Priority: 21.09.2001 GB 0122893
(71) Applicant: Hewlett Packard Company, a Delaware Corporation, Palo Alto, CA 94304 (US)
(72) Inventor: Salle, Mathias Jean Rene, Palo Alto, CA 94306 (US); Baldwin, Adrian, Downend Bristol BS16 6LQ (GB)
(74) Representative: Lawrence, Richard Anthony

(57) **Abstract**

The invention concerns method and apparatus for the selection of a service provider for providing a service to a system - for instance, for selecting a telecommunciations service provider. The apparatus comprises a system monitor (20) to monitor usage of a currently in place system (10), a data gathering system (30), to gather pricing and contract information from potential service providers (40) and an analysis engine (50) for calculating the costs to a user of adopting particular service providers. The method and apparatus are arranged to alert a user of the system to the best service provider and, optionally, to automatically cause the system to reconfigure and adopt service from the recommended provider.

## Description

The invention relates to the selection of service providers.

Presently, when a user requires, for example, the provision of a domestic electricity supply, the user has a limited and often confusing choice to make. Whilst there may be more that one possible service provider for the user to select, the user will often be unsure as to exactly which supplier would best meet his needs. Complications in deciding which company to take a contract out with include some companies having standing charges and variable tariffs according to usage and other companies avoiding standing charges but having higher basic charges. Selection between a number of different possible service providers is down to the effort that the user wishes to put into the exercise in researching what is available and then evaluating what best suits a user's needs.

The above scenario does not just apply to energy provision contracts, but to the provision of any particular service. In most market areas there will be more than one possible provider and pros and cons to many contract deals.

It is an aim of preferred embodiments of the present invention to alleviate the above problem to some extent and provide a means for automatic selection of service provider.
According to a first aspect of the invention, there is provideda method for the selection of one amongst a plurality of potential service suppliers for the supply of a particular service, the method comprising the steps of, in an on-line environment:(1) assessing a users likely desired use of the service;(2) determining the number of available service providers having terms of service provision which are potentially acceptable to a user;(3) determining the anticipated cost to the user of switching service from an existing service provider to obtain service from a new service provider; and (4) selecting a best value service provider.

A second aspect of the invention provides a method for the selection of one amongst a plurality of potential service suppliers for the supply of a particular service, the method comprising the steps of, in an on-line environment:(1) assessing a users likely desired use of the service;(2) determining the number of service providers which are potentially acceptable to the user by interrogating databases held by service providers to search such databases for costs of service provision and associated contractual terms of service provision;(3) determining amongst the set of service providers identified in step (2), which service providers are potentially able to supply the service to the user at an acceptable cost and under acceptable contract terms; and (4) selecting a best value service provider.

According to a third aspect, there is provided a method for the selection of one amongst a plurality of potential service suppliers for the on-going supply of a particular service under contract, the method comprising the steps of, in an on-line environment: (1) assessing a users likely desired use of the service over a particular period, on the basis of historical usage data; (2) determining the number of available service providers having terms of service provision which are potentially acceptable to a user; (3) determining the anticipated cost to the user of continuing to receive service provision from an existing service provider as well as anticipated costs to the user of switching service from the existing service provider to obtain service and receive continued service from a new service provider; and (4) selecting a best value service provider.

Where the user is already being provided with the service by an existing service provider, step (1) preferably comprises the following sub-steps:
(1) (I) logging data relating to the users use of the service over time; and
(1) (II) maintaining cost records of actual costs incurred over time under arrangements with the exisiting service provider.

Step (2) may comprise analysing contract terms of the available service providers and determining whether such terms would be potentially acceptable to the user. Based on such an analysis, those available service providers whose contract terms include one or more terms which would be unacceptable to the user may either be automatically eliminated from further steps of the procedure or entered into a negotiation phase in which contract terms may potentially be varied with a view to making a potential contract with such service providers more acceptable to the user.

Step (2) may comprise the sub-steps of:
(2) (I) maintaining a database of potentially user acceptable contract terms and of definitely not acceptable contract terms;
(2) (II) comparing contract terms of the available service providers with the contract terms in the database; and
(2) (III) where a contract contains any terms not present within the database: further considering such unknown terms to check or deduce whether such terms are potentially acceptable or definitely not acceptable and updating the database to include such terms.

Alternatively, step (2) may comprise consulting a database that contains parameters relating to typical contract terms and the analysis engine may perform an automatic deduction of whether particular contract terms are acceptable. Suitably, such parameters may comprise, for instance, preferences over various contract terms, risk levels, type of desired relationship with provider (long term, one shot, etc...) .

The database may store actual contract terms or store data that will allow deduction of acceptability.

Where a contract term is found that is not acceptable to a user during step 2(II) or 2(III), then the potential service provider may either be eliminated from consideration during further method steps or a negotiation procedure may be initiated.

The negotiation step preferably comprises the exchange of proposals between user and service provider with a view to converging towards contractual terms that are suitable as a whole for both service provider and customer. During negotiation not only the non-acceptable terms might be changed but other terms related in any way to them.

Preferably, step (3) comprises:
(3) (I) storing billing terms of available service providers; and
(3) (II) on the basis of stored usage information and the billing terms calculating the likely cost to a user of utilising each available service provider.

Step (4) may comprise comparing a cost of obtaining service from an existing supplier to the likely costs of obtaining service from the available service providers and selecting the lowest cost service provider.

The method may comprise the step (5) of recommending the best value service provider to the user. Alternatively, in a step (5) the best value service provider may be automatically contacted to negotiate service provision.

A step (6) may comprise commencing service with the selected service provider. Step (6) may comprise a sub-step of configuring a system of the user to comply with the selected service provider requirements and a sub-step of electronically complying with contractual requirements of the selected service provider.

Best value may be determined solely on the basis of lowest cost to the user over a particular time period.

Alternatively, best value may take into account considerations other than the actual cost of service provision. For instance, if a service provider has the lowest charges, but applies a large penalty clause payable under certain circumstances, then a better value proposition may be to accept service from an alternative, more expensive, service provider which does not apply such a penalty clause. Other parameters may be taken into account also when considering best value, or most suitable service provider. Such parameters may for instance include the "green credentials" of a service provider or it's quality of service, etc.

In the above respects, certain contract clauses whilst being stored in the database as being potentially acceptable may be associated with weighting factors which are taken into account when calculating best value.

A fourth aspect of the invention provides a method for the selection of one amongst a plurality of potential service suppliers for the supply of a particular service, the method comprising the steps of, in an on-line environment:(1) assessing a users likely desired use of the service;(2) maintaining a user database of potentially user acceptable contract terms and of definitely not acceptable contract terms, interrogating available service provider databases to determine service provision costs and associated contract terms, comparing contract terms of the available service providers with the contract terms in the database;(3) for service providers having potentially acceptable contract terms for supply of the service, determining the anticipated cost to the user of obtaining service from such service providers; and (4) selecting a best value service provider.

According to a fifth aspect of the invention, there is provided an apparatus for the selection of a service provider for providing a service to a system, the apparatus comprising: a system monitor arranged to monitor and store data concerning system usage, the system monitor arranged to capture parameters relating to system usage and a data store arranged to store usage data; a data gathering system arranged to gather data relating to costs of service provision and contract terms associated with such provision from potential service providers; and an analysis engine comprising a controller and a database containing details of contract terms associated with service provision that are potentially acceptable to the user and those which are not acceptable, the analysis engine being arranged to calculate costs to the user of utilising the various potential service providers, by performing cost calculations based on the system usage data and the data gathered from the service providers and to select the service provider who is deemed to provide the best value.

The data gathering system may comprise remote access means and a remote network arranged to seek details of potential service providers. Details gathered may comprise billing information relating to the cost of utilising potential service providers and may further comprise contract terms associated with provision of the service by the service providers or comprise other parameters associated with provision of the service by the service providers. The gathered details are thereafter preferably stored.

The analysis engine is preferably arranged to compare gathered details relating to contract terms and compare the gathered details to the potentially acceptable and not acceptable contract terms stored in the database.

The database may contain parameters relating to typical contract terms and the analysis engine may perform an automatic deduction of whether particular contract terms are acceptable. Suitably, such parameters may comprise, for instance, preferences over various contract terms, risk levels, type of desired relationship with provider (long term, one shot, etc...) .

Preferably, where a service provider includes any contract terms which are not acceptable to the user, then the respective service provider is not considered any further, or alternatively a negotiation procedure is initiated in which the potential service provider is informed that a particular term is not acceptable to the user and is invited to retract that term or modify it. Where a service provider imposes no unacceptable terms, but imposes terms which are not contained in the database, then such unknown terms are given further consideration. Such further consideration may constitute referring the unknown term to the user via a user interface or, alternatively, the analysis engine may using its' knowledge of previously agreed contract terms and entered user preferences deduce whether such a term is likely to be acceptable or not. Following consideration of the unknown contract term by a user the database is preferably updated to include the new term.

The analysis engine is preferably arranged to compare billing costs associated with potential service providers and an existing service provider (if applicable) and select a best value service provider. The best value provider is preferably recommended to the user as the service provider to choose. Alternatively, the apparatus may be arranged so as to automatically request service from the service provider without recourse to the user.

For a better understanding of the invention, and to show how embodiments of the same may be carried into effect, reference will now be made, by way of example, to the accompanying diagrammatic drawings in which:
Figure 1 is a schematic block diagram of apparatus for the automatic selection of a service provider;
Figure 2 is a flow chart relating to a process of gathering and storing usage data carried out by a user device forming part of the apparatus of Figure 1;
Figure 3 is a flow chart relating to a process of assessing service providers which is carried out by the user device; and
Figure 4 is a flow chart illustrating a process of contract negotiation and sign-up following the selection of a service provider by the user device.

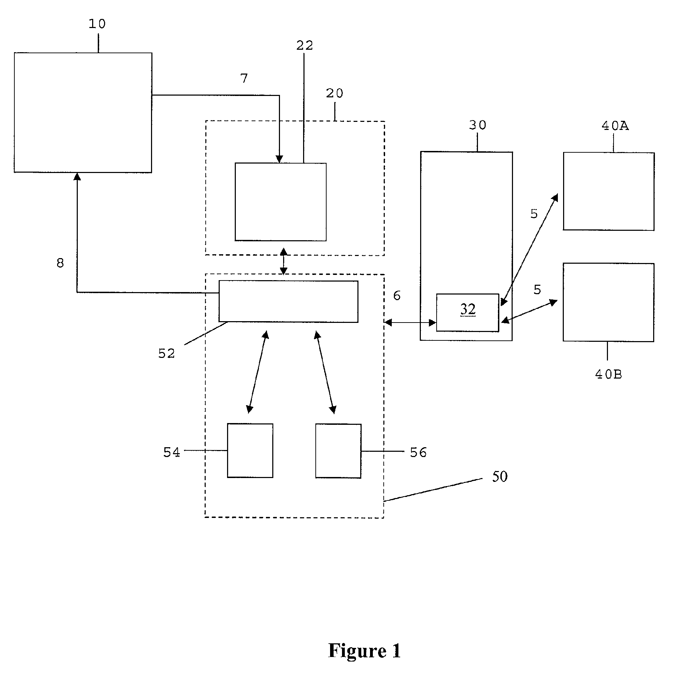

Referring now to Figure 1, there is shown a system to be monitored 10, a system monitor 20, a data gathering system to gather data from potential service provider equipments 40A, 40B and an analysis engine 50. Here, the data gathering system may comprise an information server (IS) 30 arranged to communicate with both the analysis engine 50 and service provider equipments 40A, 40B via remote access means 32 of the information server 30.

The system 10 supplies usage data to the system monitor 20 via a connection 7 and receives configuration information from the analysis engine 50 via connection 8. A bi-directional connection 6 between analysis engine 50 and IS 30 links analysis engine 50 to IS 30 and bi-directional connections 5 also exist between the IS 30 and service provider equipments 40A, 40B. Typically, the connections 5, 6 are network connections such as internet connections.

The system monitor 20 comprises a data store 22 which receives the usage information via connection 7 from system 10.

The analysis engine 50 comprises a controller 52, a database in memory 54 and a user interface 56.

Operation of the system of Figure 1 will now be explained in detail. For the purposes of this example, it will be assumed that the system 10 relates to a domestic electricity supply.

System monitor 20 is arranged to receive on a periodical basis usage information from the system 10, via the connection 7 and store such usage information in the data store 22. Typically, the usage information for a domestic electricity supply may be details regarding electricity consumption sampled over various periods of a day and, indeed, such sampling may continue for a very large period of time, such that one full year's worth of data may eventually be stored in the data store 22.

For the particular example shown, data covering a period of the preceding 12 months is useful in providing a full picture of how the system 10 is used over time. It is critical however that the data store 22 be configured so as to store information which matches the types of information criteria underlying the billing structures of service providers. If information is not stored according to those criteria, or is not retrievable to match such criteria, then a meaningful choice between the various service providers is not possible.

Where no service has been previously provided and no actual usage data is available, the data store may be filled with dummy usage data concerning anticipated usage. Such data may be generated by selecting amongst average usage patterns of users of a similar type. For instance, typical energy consumption of a childless couple living in a three bedroomed house and having various electrical appliances.

The analysis engine 50 is arranged for interrogation of the data store 22 and to compare billing terms and other supply terms of service providers. These billing terms and other supply terms are transmitted to the analysis engine 50 via the bi-directional connection 6 between it and IS 30 for storage in database 54. The IS 30 acts as an interface between the site based system comprising system 10, system monitor 20 and analysis engine 50 and the externally based service provider equipments 40A, 40B. The IS 30 receives or fetches all the latest offers concerning different possible provisions and payment plans from the service provider equipments to pass such information on to the analysis engine 50.

In broad terms, the controller 52 of the analysis engine 50 on the basis of usage of the system 10 and on the basis of how that usage would be paid for according to the billing terms of the various service providers, decides which service provider will provide the most suitable deal for the user of the system 10. By most suitable, it will be appreciated that such a deal might for example be lowest cost based, based on a minimal environmental impact, or based on any other parameter or set of parameters which might be of importance to the user. The controller 52 may also take into account other terms, such as when payment is required by service providers, whether payment is required by direct debit etc. and checks whether those terms are acceptable user terms. Indications of acceptable/non-acceptable criteria may be pre-established by a user entering such information regarding preferences via user interface 56 and storing them in database 54. Such indications may comprise lists of acceptable contract terms or parameters relating to, for instance, preferences over various contract terms, risk levels, type of desired relationship with provider (long term, short term, one-off etc.). These indications may be arranged to allow the controller 62 to deduce whether or not actual. If service provider terms (which are also stored in memory 54 are acceptable). If a service providers' terms are not acceptable, then even though a service provider may provide an otherwise most suitable service, the analysis engine 50 may suggest an alternative service provider which meets the users other requirements. Alternatively here, rather than eliminate a potential service provider at this stage, that service provider may be allowed to negotiate the non-acceptable term so as to retract or modify it or other contract terms in some way which could prove acceptable to the user.

Upon reaching a conclusion as to which service provider will give the best overall service to a user, the analysis engine 50 may request user confirmation from user interface 56 that a change in service provider is required and, if confirmation from the user is received the analysis engine 50 is arranged to negotiate with the chosen service provider to commence service from that service provider and provide any necessary identification for fulfilment of an electronic contract. The analysis engine 50 may further be configured to contact the existing service provider and terminate an existing contractual relationship.

The analysis engine 50 may also be arranged to provide configuration information to the system 10 via connection 8 to enable system 10 to configure itself to the new service provider.

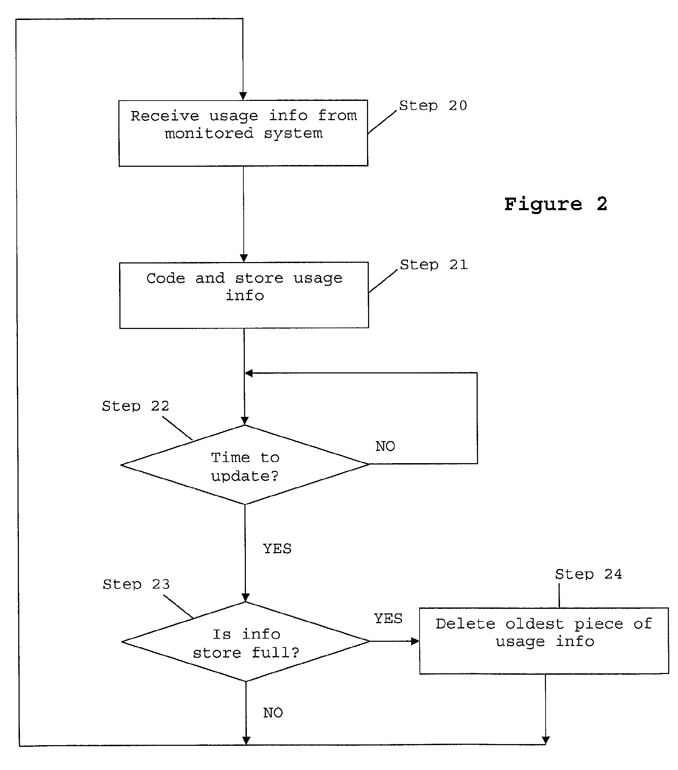

Referring now to Figure 2, there is shown a flow chart illustrating the storage of usage data within data store 22. In a step 20, usage information is received from the monitored system 10. The usage data may, in the example of domestic electric supply come from a supply monitor adjacent the electricity meter or from the meter itself.

Received usage data is coded and stored in the store 22 in step 21.

In step 22, it is decided whether or not it is time for an update of information, if not then a wait loop is entered. If it is time to update, then it is determined in step 23 whether or not the information store 22 is full. If the information store 22 is not full, then the storage method returns to step 20. If however, the information store is full then the oldest piece of usage information in the store 22 is deleted, prior to returning to step 20.

It will be appreciated that the abovementioned method provides a means by which usage information may be gathered periodically and stored in the usage data store 22 on a first in first out (FIFO) basis.

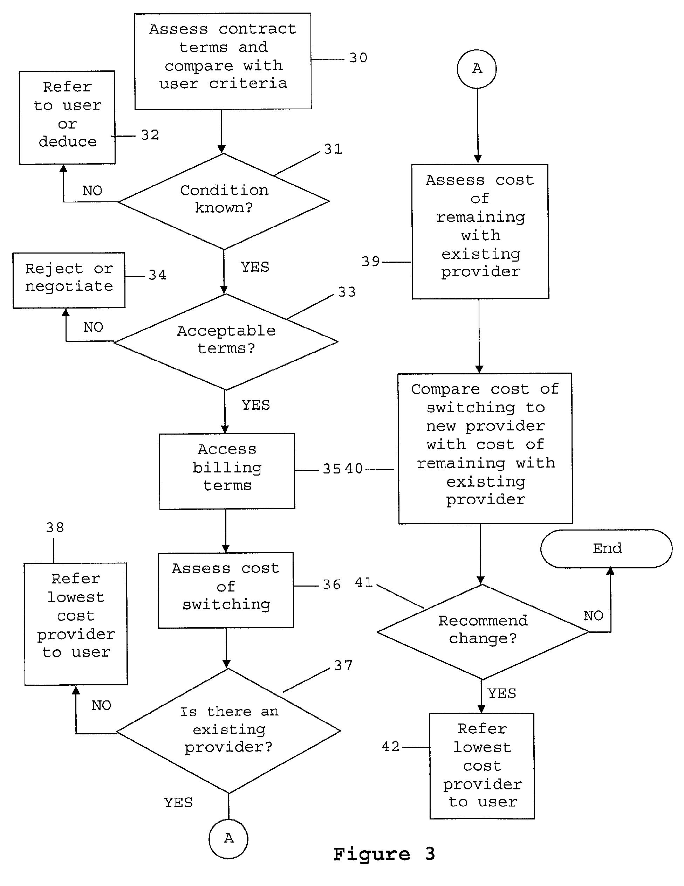

Referring now to Figure 3, there is shown a method by which the analysis engine 50 may decide whether or not to adopt a particular service provider.

Referring in detail to Figure 3, for each particular service provider a series of steps 30 through 36 are carried out. These steps are shown in full for a first service provider A, and it will be appreciated that the steps for service providers B ... N are exactly the same.

In a first step, the analysis engine 50 gathers from connection 6 and stores in memory 54 the contract terms and billing criteria for service supply from the various service providers and in a preliminary step compares contract terms with user acceptable criteria. Such user acceptable criteria are also stored in memory 54 and comprise information such as whether or not the user is willing to subscribe on a direct debit basis, pay in advance, pay spread over a particular period etc. In step 31, it is determined whether or not the particular contract terms specified by the service provider correspond to known conditions in the memory 54. If the contract term is not known, then the contract term in question may either in step 32 be referred to the user via the interface 56 to check whether or not such a term would be acceptable or the controller 52 may, using knowledge of user preferences and/or knowledge of previously accepted terms deduce the acceptability or otherwise of the unknown term. If such a term would be acceptable, then the memory 54 may be updated by adding this as a new acceptable condition. On the contrary, if the term would not be acceptable, then this may also be added into the memory 54 as a non-acceptable condition.

In step 33, it is then determined whether or not the known contract term is acceptable. If such a term is not acceptable then in step 34 the particular service provider may either be rejected from the selection process or a negotiation process may be initiated in which the service provider is informed of the non-acceptability of a contract term and invited to retract or modify or impose a different potentially acceptable term. However, if the term is an acceptable one, then in step 35 billing terms from the potential service provider are accessed. In step 36, the cost to the user of switching to the potential service provider and receiving service during the next billing period(s) is assessed based on the stored usage data. This assessment correlates the usage information with the billing methods of the service provider and other relevant information such as any penalty costs which may be incurred in breaking an existing contract to give a cost to the user which is stored.

The service provider cost of a particular potential service provider "A" for the billing period in question and stored in step 36 may be regarded as a cost figure of "COST A". It will be appreciated that there will in general be other potential service providers "B" through "N", each of which will also undergo steps 30 to 36 outlined above to potentially arrive at respective cost figures "COST B" through "COST N" which are also stored.

In a step 37, it is determined whether or not there is an existing service provider. If there is not an existing service provider then, in step 38 the lowest cost service provider having acceptable contract terms is selected and referred to the user for acceptance.

If however in step 37 there is an existing service provider then a step 39 is carried out in which the cost to the user of keeping the current service provider during the next billing period(s) is calculated based on the stored usage data and this is stored as a "COST 1".

In a step 40, COST 1 is compared to COSTS A through N and it is determined whether or not any among A through N undercut cost 1 by more than a predetermined amount (which may be zero). If the lowest cost undercuts cost 1 by more than the predetermined amount then a change is recommended to the user in step 41. If however there is no cost saving to the user or if the cost saving is less than the predetermined amount then no change is recommended to the user and the procedure ends.

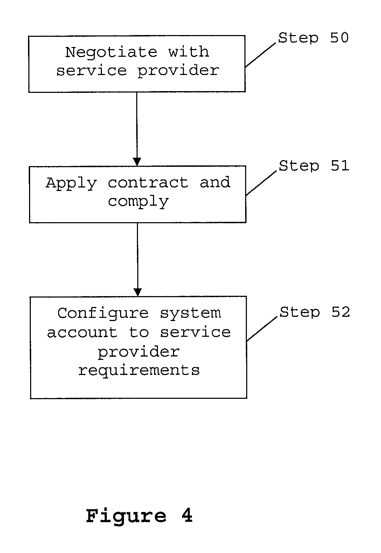

Referring now to Figure 4, there is shown a flow chart representing the method steps which are necessary in accepting a new service provider.

In Figure 4, assuming that the user has accepted a recommendation to change, step 50 is carried out which is a step in which the user equipment comprising analysis engine 50 negotiates with a service provider by means of service provider equipment 40. This negotiation step 50 may comprise a number of sub-steps, for instance, indicating a willingness to receive a service from the service provider, and receiving, in principle, acceptance of the user's offer and confirmation of the contract and billing terms

In step 51, the contract may be accepted on behalf of the user and comply with any necessary online contract terms. Such compliance may comprise transmitting bank details to the service provider and utilisation of a private key or similar to provide authority.

Finally, in step 52 configuration information is sent to the system 10 via connection 8 to configure the system 10 according to particular service provider requirements. For instance, a service provider may have particular reporting requirements so that usage data is passed directly to the service provider from the system monitor 20 and controller 52. Other possible configuration equipment may comprise restrictions on usage of the system 10, so as to automatically shut down the system 10 after a particular period of use.

Whilst the above invention has been described using the example of seeking an alternative electricity supplier, it will be appreciated that the system may be applied to virtually any service in the real world or digitally provided. For instance, if a user wishes to rent a particular piece of equipment, he may use the system monitor to enter data concerning the particular type of equipment he wishes to hire and the system monitor may automatically interrogate the various service providers via information server 30 to determine which service providers in a particular geographical area are able to comply with a users contract requirements and which ones provide the most cost effective solution. In another example, invention may be applied to the provision of a purely electronic service such as the provision of digital content over the internet. Again, negotiation and fulfilment of a contract to supply the particular article may be carried out automatically.

## Claims

1. A method for the selection of one amongst a plurality of potential service suppliers for the supply of a particular service, the method comprising the steps of, in an on-line environment:
(1) assessing a users likely desired use of the service;
(2) determining the number of available service providers having terms of service provision which are potentially acceptable to a user;
(3) determining the anticipated cost to the user of switching service from an existing service provider to obtain service from a new service provider; and
(4) selecting a best value service provider.

2. A method for the selection of one amongst a plurality of potential service suppliers for the supply of a particular service, the method comprising the steps of, in an on-line environment:
(1) assessing a users likely desired use of the service;
(2) determining the number of service providers which are potentially acceptable to the user by interrogating databases held by service providers to search such databases for costs of service provision and associated contractual terms of service provision;
(3) determining amongst the set of service providers identified in step (2), which service providers are potentially able to supply the service to the user at an acceptable cost and under acceptable contract terms; and
(4) selecting a best value service provider.

3. A method for the selection of one amongst a plurality of potential service suppliers for the on-going supply of a particular service under contract, the method comprising the steps of, in an on-line environment:
(1) assessing a users likely desired use of the service over a particular period, on the basis of historical usage data;
(2) determining the number of available service providers having terms of service provision which are potentially acceptable to a user;
(3) determining the anticipated cost to the user of continuing to receive service provision from an existing service provider as well as anticipated costs to the user of switching service from the existing service provider to obtain service and receive continued service from a new service provider; and
(4) selecting a best value service provider.

4. A method for the selection of one amongst a plurality of potential service suppliers for the supply of a particular service, the method comprising the steps of, in an on-line environment:
(1) assessing a users likely desired use of the service;
(2) maintaining a user database of potentially user acceptable contract terms and of definitely not acceptable contract terms, interrogating available service provider databases to determine service provision costs and associated contract terms, comparing contract terms of the available service providers with the contract terms in the database;
(3) for service providers having potentially acceptable contract terms for supply of the service, determining the anticipated cost to the user of obtaining service from such service providers; and
(4) selecting a best value service provider.

5. The method of claim 1,2, 3 or 4, wherein where the user is already being provided with the service by an existing service provider, step (1) comprises the following sub-steps:
(1) (I) logging data relating to the users use of the service over time; and
(1) (II) maintaining cost records of actual costs incurred over time under arrangements with the exisiting service provider.

6. The method of claim 1, 2 or 3, or claim 5 as dependant on claim 1, 2 or 3, wherein Step (2) comprises analysing contract terms of the available service providers and determining whether such terms would be potentially acceptable to the user.

7. The method of claim 1, 2 or 3, or claim 5 or 6 as dependant on claim 1, 2 or 3, wherein Step (2) comprises the sub-steps of:
(2) (I) maintaining a database of potentially user acceptable contract terms and of definitely not acceptable contract terms;
(2) (II) comparing contract terms of the available service providers with the contract terms in the database; and
(2) (III) where a contract contains any terms not present within the database: further considering such unknown terms to check or deduce whether such terms are potentially acceptable or definitely not acceptable and updating the database to include such terms.

8. The method of claim 7, wherein where a contract term is found that is not acceptable to a user during step 2(II) or 2(III), then the potential service provider may either be eliminated from consideration during further method steps or a negotiation procedure may be initiated.

9. The method of claim 4, wherein Step (2) further comprises and the step of, where a contract contains any terms not present within the user database: further considering such unknown terms to check or deduce whether such terms are potentially acceptable or definitely not acceptable and updating the database to include such terms.

10. The method of claim 9, wherein where a contract term is found that is not acceptable to a user, then the potential service provider may either be eliminated from consideration during further method steps or a negotiation procedure may be initiated.

11. The method of any preceding claim, wherein step (3) comprises:
(3) (I) storing billing terms of available service providers; and
(3) (II) on the basis of stored usage information and the billing terms calculating the likely cost to a user of utilising each available service provider.

12. The method of any preceding claim, wherein step (4) comprises comparing a cost of obtaining service from an existing supplier to the likely costs of obtaining service from the available service providers and selecting the best value service provider.

13. The method of any preceding claim, wherein the method comprises the step (5) of recommending the best value service provider to the user.

14. The method of any of claims 1 to 12, wherein in a step (5) the best value service provider is automatically contacted to negotiate service provision.

15. The method of claim 13 or 14, wherein a step (6) comprises commencing service with the selected service provider.

16. The method of claim 15, wherein step (6) comprises a sub-step of configuring a system of the user to comply with the selected service provider requirements and a sub-step of electronically complying with contractual requirements of the selected service provider.

17. An apparatus for the selection of a service provider for providing a service to a system (10), the apparatus comprising:
a system monitor (20) arranged to monitor and store data concerning system usage, the system monitor arranged to capture parameters relating to system usage and a data store (22) arranged to store usage data;
a data gathering system (30) arranged to gather data relating to costs of service provision and contract terms associated with such provision from potential service providers; and
an analysis engine (50) comprising a controller (52) and a database (54) containing details of contract terms associated with service provision that are potentially acceptable to the user and those which are not acceptable, the analysis engine (50) being arranged to calculate costs to the user of utilising the various potential service providers, by performing cost calculations based on the system usage data and the data gathered from the service providers and to select the service provider who is deemed to provide the best value.

18. The apparatus of claim 17, wherein the data gathering system (30) comprises remote access means (32) for connecting to a network and seeking details of potential service providers.

19. The apparatus of claim 16, 17, or 18 wherein the analysis engine (50) is arranged to compare gathered details relating to contract terms and compare the gathered details to the potentially acceptable and not acceptable contract terms stored in the database (54).

20. The apparatus of claim 16, 17, 18 or 19, wherein the analysis engine (50) is arranged to compare billing costs associated with service providers and select a best value service provider.
